# EUROPEAN PATENT APPLICATION

(11) **EP 4 620 905 A1**
(43) Date of publication of application: **24.09.2025**
(21) Application number: 24165667.7
(22) Date of filing: 22.03.2024
(51) Int. Cl.: C01B 3/04

(54) **CRACKING OF AMMONIA USING A CONDENSING MEDIUM**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Shrivastava, Swatantra Kumar, 60439 Frankfurt am Main (DE); Lutz, Michael, 60439 Frankfurt am Main (DE); Vicari, Lorenzo, 60439 Frankfurt am Main (DE); Ulber, Dieter, 60439 Frankfurt am Main (DE)
(74) Representative: Air Liquide

(57) **Abstract**

Process for producing hydrogen from ammonia, comprising the steps :
i) providing an ammonia feed,
ii) providing a condensable medium, preferably water steam,
iii) performing an endothermic cracking reaction of the ammonia feed in a cracker unit (18, 28) for producing a cracked gas comprising hydrogen and nitrogen,
iv) condensing at least partially said condensable medium,
v) providing heat from the condensation to the endothermic cracking reaction,
vi) recovering hydrogen from said cracked gas or from a gas derived from said cracked gas.

## Description

The present invention relates to a process for the production of hydrogen from an ammonia feed. The invention also relates to an apparatus configured to perform such a process.

Hydrogen is renowned for its lightweight nature and optimal combustion properties as a fuel and its environment-friendliness during its combustion, i.e., no emission of any carbon dioxide (CO2), particulate or sulfur. This makes hydrogen a vector for the energy transition.

However, transporting pure hydrogen gas is a complex challenge, in particular for safety reasons. To this end, ammonia (NH3), containing three atoms of hydrogen, can facilitate the transport of hydrogen (H2).

Nevertheless, ammonia has poor combustion properties, such as small explosion limits window, high ignition temperature, and slow kinetics. For example, for combustion applications of ammonia in industrial furnaces, increasing the ammonia concentration in a fuel leads to instability of the flame during the fuel combustion. Currently, pure ammonia combustion is impossible to achieve under industrial conditions. In addition, the combustion of ammonia produces nitrogen oxide (NOx).

Processes of ammonia splitting into hydrogen and nitrogen are applied to recover hydrogen from ammonia. The recovered hydrogen has much better combustion properties and is suitable for industrial use or as a transportation fuel.

It is known to have a pre-cracking step of the ammonia feed followed by a main cracking step in a main cracker. The pre-cracking step allows to reduce the heat duty in the main cracker for the heat input to the endothermic process. Prior art schemes usually use a simple adiabatic pre-cracker, wherein the endothermic heat of reaction is supplied via the ammonia feed that has been pre-heated. The ammonia feed is pre-heated, for example by recovering waste heat from a main cracker flue gas.

In an adiabatic cracker, the temperature difference between the inlet and outlet reactor temperature indicates the amount of ammonia conversion to hydrogen based on the endothermic nature of the reaction. The extent of reaction, i.e. the ammonia conversion rate, is limited, because the reaction is too slow at lower temperatures. The higher the inlet temperature to the adiabatic reactor, the higher will be the ammonia conversion. Such an adiabatic process therefore requires keeping the inlet temperature of the adiabatic pre-cracker high enough, typically 500 to 650°C and so the pre-heating high enough. This requires using high grade materials for the pre-cracker. The outlet temperature of the pre-cracker is lower due to the sensible cooling of the reaction gas along the endothermic reaction. In addition, the conversion rate of an adiabatic reactor remains limited, as the high temperature heat for preheating is more valuable and not always readily available in the overall process. For example, there might not be enough heat capacity in the flue gas to heat the gas before entering the adiabatic pre-cracker.

Other ammonia splitting processes, not necessarily implementing an adiabatic pre-cracking step, may also present an imperfect conversion rate due to heating or temperature inhomogeneities or due to other reasons, such as catalyst deactivation.

There is in general a need to improve the conversion rate of processes of ammonia splitting, for example processes of ammonia splitting comprising an adiabatic pre-cracking step and other ammonia splitting processes.

For this purpose, the invention relates to a process for producing hydrogen from ammonia, comprising the steps :
i) providing an ammonia feed,
ii) providing a condensable medium, preferably water steam,
iii) performing an endothermic cracking reaction of the ammonia feed in a cracker unit for producing a cracked gas comprising hydrogen and nitrogen,
iv) condensing at least partially said condensable medium,
v) providing heat from the condensation to the endothermic cracking reaction,
vi) recovering hydrogen from said cracked gas or from a gas derived from said cracked gas.

The use of the condensable medium, such as water steam, to provide heat for the endothermic cracking reaction allows for, in a non-exhaustive way, the following advantages.

During the condensation of the condensable medium from vapor to liquid, a latent heat is released to the cracker unit, as well as possibly sensible heat, driving the cracking reaction forward. As a result, the ammonia feed does not need to be heated at high temperatures at the inlet of the cracker unit. This avoids the use of costly materials to build said cracker unit. In addition, the use of a condensable medium enables a more homogeneous temperature distribution within the cracker unit. Therefore, the whole cracker unit exhibits high reaction rates, as opposed to the adiabatic case.

Furthermore, a condensable medium can be chosen among a variety of condensable media in order to provide heat for the endothermic reaction. In addition, at a given condensable medium, the temperature at which the cracking reaction takes place can be precisely adjusted with the pressure of the condensable medium.

Moreover, the condensable medium can be available from recovering waste heat from the process or from another process.

Additionally, it should be pointed out that the invention allows to circumvent a complex heat integration of the cracker unit with a flue gas conduit or a complex heat integration of the cracker unit with a conduit for the discharge of the cracked gas or a gas derived from the cracked gas. Instead, the use of a condensable medium as a heat transfer medium allows a safe, simple and compact design.

By the "condensable medium" is meant a substance, for example, water steam, or a vapor, from which heat, in particular a latent heat as well as possibly a sensible heat, is released for the endothermic cracking reaction during the condensation of the condensable medium.

The invention may comprise at least one of the following features, taken independently or in combination.

In one embodiment, the cracked gas comprises hydrogen, nitrogen and uncracked ammonia.

In one embodiment, step iii) comprises the following steps :
- performing a pre-cracking reaction of the ammonia feed in a pre-cracker unit for producing a partly converted ammonia feed comprising ammonia, hydrogen and nitrogen,
- performing a main endothermic cracking reaction of the partly converted ammonia feed in a main cracker unit for producing said cracked gas,
and step v) comprises providing said heat from the condensation to the pre-cracking reaction.

The cracker unit comprises the pre-cracker unit and the main cracker unit.

In one embodiment, step ii) comprises providing said condensable medium from a boiler, in particular from a water boiler.

In one embodiment, step ii) comprises :
- providing a cooling medium,
- recovering heat from an effluent of the cracker unit, in particular an effluent of the main cracker unit, by at least partially vaporizing said cooling medium,
- providing the at least partially vaporized cooling medium as said condensable medium.

The effluent may comprise said cracked gas, said gas derived from the cracked gas and/or a flue gas. The cooling medium comprises for example water, in particular boiler feed water, for example boiler feed water for said water boiler, and the condensable medium comprises water steam. The step of recovering heat from the effluent comprises for example vaporizing said cooling medium in the boiler, in particular in said water boiler.

Alternatively or in addition, step ii) may comprise importing said condensable medium from a battery limit.

In one embodiment, the process comprises providing the at least partially condensed medium produced in step iv) as said cooling medium. This enables recycling the condensed medium to produce said condensable medium.

In one embodiment, the cracker unit comprises a catalyst bed and step iii) comprises passing the ammonia feed to said catalyst bed and performing the endothermic cracking reaction in said catalyst bed. In particular, the catalyst bed is comprised in said pre-cracker unit and the process comprises performing the pre-cracking reaction is in said catalyst bed.

In one embodiment, the cracker unit, in particular the pre-cracker unit, comprises a condensable medium circulation section arranged in thermal communication with the catalyst bed. Step iv) comprises passing the condensable medium to the condensable medium circulation section and condensing at least partially the condensable medium in the condensable medium circulation section.

In one embodiment, the pre-cracker unit comprises a heat exchanger arranged for the thermal communication of the condensable medium circulation section with the catalyst bed. The heat exchanger is in particular a shell-and-tube heat exchanger comprising a shell, said heat exchanger comprising a circulation channel or a bundle of circulation channels extending within the shell. The circulation channel or circulation channels may have the shape of a straight tube or the shape of a coil. Alternatively, the heat exchanger may be a shell and plate heat exchanger.

In one embodiment, the condensable medium circulation section is formed by said shell and the catalyst bed is comprised in said circulation channel or in said circulation channels or the catalyst bed is comprised between plates of the shell and plate heat exchanger. Alternatively, the condensable medium circulation section may be formed by said circulation channel or circulation channels or formed between said plates of the shell and plate heat exchanger and the catalyst bed is comprised in said shell.

In one embodiment, performing a pre-cracking reaction further comprises :
- withdrawing a gas mixture produced through a first pre-cracking reaction in said catalyst bed and
- performing a further adiabatic pre-cracking reaction of the withdrawn gas mixture in an adiabatic reactor, thereby producing said partly converted ammonia feed.
In particular, performing a pre-cracking reaction further comprises heating the withdrawn gas mixture and performing said further adiabatic pre-cracking reaction with the heated gas mixture as a feed. The withdrawn gas mixture is in particular heated at a temperature comprised between 450 and 700°C, preferably between 550 and 650°C.

In particular, the pre-cracker unit comprises said adiabatic reactor, in particular the pre-cracker unit comprises the heat exchanger and the adiabatic reactor.

In one embodiment, the main cracker unit comprises a reactor comprising one or more catalyst filled tubes and the main endothermic cracking reaction comprises passing the partly converted ammonia feed to said one or more catalyst filled tubes heated through a combustion. The flue gas may be generated by said combustion.

In one embodiment, the process further comprises controlling the pressure of the condensable medium condensing in step iv), so as to regulate a temperature of the endothermic cracking reaction, in particular a temperature of the pre-cracking reaction. The pressure of the condensable medium is for example controlled between 70 and 130 barg, preferably between 100 and 130 barg during step iv).

In one embodiment, the pressure of the condensable medium is achieved by the condensable medium pump, for example, a boiler feed water pump, and controlled with a valve on the vaporized stream of the condensable medium.

Controlling the pressure of the condensable medium allows to finely adjust the temperature level within the cracker unit. Therefore, the conversion rate of the cracking reaction, as well as a predetermined ratio of ammonia or uncracked ammonia, hydrogen and nitrogen can be precisely adjusted.

In one embodiment, the provided condensable medium is at a superheated state. In particular, the process further comprises a desuperheating step of the superheated condensable medium, said desuperheating step comprising providing sensible heat from the superheated condensable medium to the endothermic reaction, so as to provide a condensable medium at a saturated state for step iv).

In one embodiment, the process further comprises a pre-heating step comprising pre-heating the provided ammonia feed and step iii) comprises performing an endothermic reaction of the pre-heated ammonia feed. In particular, performing a pre-cracking reaction comprises performing a pre-cracking reaction of the pre-heated ammonia feed. The provided ammonia is advantageously preheated at a temperature comprised between 200 and 650 °C, preferably comprised between 200 and 450 °C.

The inlet temperature of the cracker unit, in particular of the pre-cracker unit, can be lower than for the prior art adiabatic pre-crackers, yet achieving similar conversion thanks to the heat input from the condensation. Cheaper materials can be chosen for the reactor design.

In one embodiment, a pressure in said pre-cracker unit, in particular in said heat exchanger, during step iii) is comprised between 15 and 60 barg.

In one embodiment, the partly converted ammonia feed is produced at a temperature comprised between between 300 and 650°C, preferably between 400 and 550°C, more preferably between 200 and 350°C.

In one embodiment, the condensable medium comprises water steam. Alternatively, the condensable medium may comprise one or more of the following components at least partially in a gas phase : sodium-potassium alloys, potassium or caesium.

In one embodiment, step vi) comprises recovering hydrogen from the cracked gas or from a gas derived from the cracked gas by pressure swing adsorption and/or partial condensation.

The invention also relates to an apparatus configured to produce hydrogen from an ammonia feed, said apparatus comprising:
- a cracker unit configured for producing a cracked gas comprising hydrogen and nitrogen from said ammonia feed,
- a hydrogen recovery unit configured for recovering hydrogen from said cracked gas or from a gas derived from said cracked gas,
wherein said cracker unit comprises :
- a catalyst bed suitable to perform an endothermic ammonia cracking reaction of the ammonia feed into said cracked gas,
- a condensable medium circulation section arranged in thermal communication with the catalyst bed and for the circulation and condensation of a condensable medium, to provide heat to the catalyst bed.

The invention may comprise at least one of the following features, taken independently or in combination.

In one embodiment, the apparatus comprises an ammonia tank connected to the cracker unit for providing said ammonia feed to the cracker unit.

In one embodiment, the cracker unit comprises :
- a pre-cracker unit arranged to receive the ammonia feed for producing a partly converted ammonia feed comprising ammonia, hydrogen and nitrogen, said pre-cracker unit comprising the catalyst bed and the condensable medium circulation section,
- a main cracker unit arranged to receive the partly converted ammonia feed for producing said cracked gas.

In one embodiment, the apparatus comprises a boiler and a condensable medium conduit connecting said boiler to the condensable medium circulation section for providing said condensable medium from the boiler to the condensable medium circulation section. In particular, the apparatus further comprises a condensed medium conduit connecting the condensable medium circulation section to the boiler for providing the at least partially condensed medium from the condensable medium circulation section to the boiler.

In one embodiment, the apparatus comprises a waste heat recovery section arranged for recovering heat from an effluent of the cracker unit, in particular from an effluent of the main cracker unit, wherein the waste heat recovery section comprises said boiler arranged for producing the condensable medium using the recovered heat. In one example, the cracker unit, in particular the main cracker unit, comprises a flue gas conduit for the discharge of a flue gas from the cracker unit, in particular from the main cracker unit and/or a conduit for the discharge from the cracker unit, in particular from the main cracker unit, of the cracked gas or a gas derived from the cracked gas. The waste heat recovery section is arranged for recovering heat from said flue gas conduit and/or arranged for recovering heat from said conduit for the discharge of the cracked gas or a gas derived from the cracked gas.

In one embodiment, the pre-cracker unit comprises a heat exchanger arranged for the thermal communication of the condensable medium circulation section with the catalyst bed. Said heat exchanger is in particular a shell-and-tube heat exchanger comprising a shell and a circulation channel or a bundle of circulation channels extending within said shell. The circulation channel or circulation channels may have the shape of a straight tube or the shape of a coil. Alternatively, the heat exchanger may be a shell and plate heat exchanger. In particular, the condensable medium circulation section is formed by said shell and the catalyst bed is comprised in said circulation channel or in said circulation channels or the catalyst bed is comprised between plates of the shell and plate heat exchanger. Alternatively, the condensable medium circulation section may be formed by said circulation channel or circulation channels or formed between said plates of the shell and plate heat exchanger and the catalyst bed is comprised in said shell.

In one embodiment, the heat exchanger comprises an inlet configured to receive the ammonia feed and an outlet configured to discharge the partly converted ammonia feed or a gas mixture from the pre-cracker unit. In particular, the heat exchanger comprises an inlet manifold fluidically connecting said gas inlet and said circulation channels of the bundle and/or an outlet manifold fluidically connecting said gas outlet and said circulation channels of the bundle. The bundle is advantageously extending between the inlet manifold and the outlet manifold.

In one embodiment, the pre-cracker unit further comprises an adiabatic reactor connected to the heat exchanger, in particular connected to the outlet of the heat exchanger, to perform an adiabatic pre-cracking reaction of a gas mixture withdrawn from said heat exchanger. The pre-cracker unit comprises in particular a heater arranged between the heat exchanger and the adiabatic reactor for heating the withdrawn gas mixture.

In one embodiment, the main cracker unit comprises one or more catalyst filled reactor tubes and a furnace configured to heat said reactor tubes by firing. In particular, the flue gas conduit is connected to said furnace for the discharge of a flue gas generated by said firing.

In one embodiment, the apparatus comprises a pressure controller configured to control the pressure of the condensable medium in the condensable medium circulation section, so as to regulate an amount of said heat provided to the catalyst bed.

In one embodiment, the hydrogen recovery unit comprises a pressure swing adsorption unit and/or a partial condensation separation unit.

The invention also relates to a start-up method of a plant for the production of hydrogen from ammonia, said method comprising :
- providing an ammonia feed,
- providing a condensable medium, preferably water steam,
- condensing at least partially said condensable medium,
- providing heat from the condensation to an endothermic cracking reaction of the ammonia feed for starting said endothermic cracking reaction and producing a cracked gas comprising hydrogen and nitrogen.

In one embodiment, the start-up method comprises recovering hydrogen from the cracked gas or from a gas derived from the cracked gas.

In what has been described above, "steam" or "water steam" can be understood as being equivalent and "steam" is used for the sake of simplicity. "Battery limit" shall be understood as the boundaries of an area within which the process for producing hydrogen according to the invention and/or the apparatus according to the invention is/are located.

Other features, details and advantages of the invention will become clearer on reading the detailed description set out below, together with several embodiments provided purely as examples and by way of indication, with reference to the attached schematic drawing, in which:
Figure 1 shows a process for producing hydrogen from ammonia according to the state of the art.
Figure 2 shows a first embodiment of a process and apparatus according to the invention.
Figure 3 shows a part of the process according to the first embodiment.
Figure 4 shows a second embodiment of the process and apparatus according to the invention.

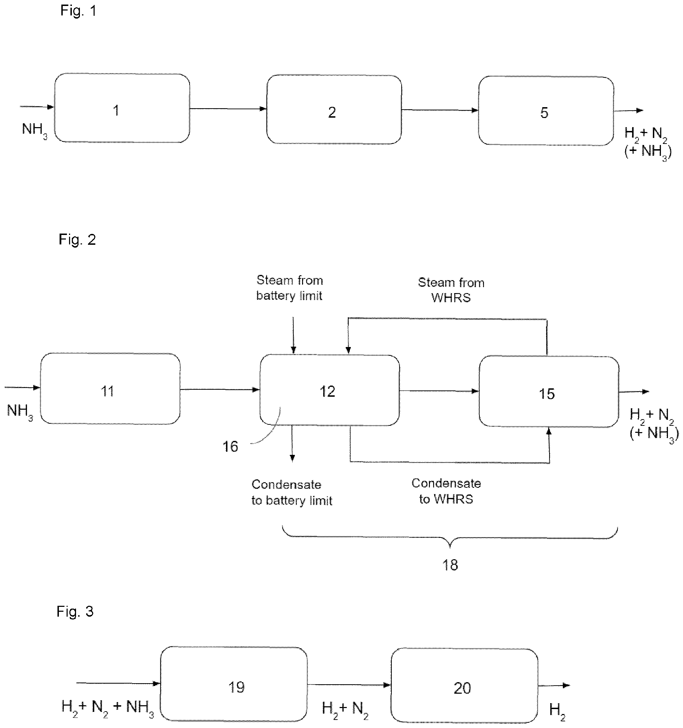

In the state of the art process for producing hydrogen of figure 1, ammonia is provided from an ammonia storage tank (not represented) in a liquid state, for example at a temperature of around -33°C. The ammonia is vaporized and superheated in a vaporizer and superheater 1. The cracking of the vaporized and superheated ammonia is carried out in two steps, a first pre-cracking reaction in an adiabatic reactor 2, followed by a main cracking reaction in a main cracker unit 5 comprising one or more catalyst filled tubes. The main cracker unit 5 typically comprises a furnace with burners (not represented) for the heating of the catalyst filled tubes and to provide heat to the main endothermic cracking reaction. A hot cracked gas comprising hydrogen, nitrogen and potentially unconverted ammonia is obtained. The hot cracked gas may be cooled. The cooled cracked gas may then be sent to a water wash column (not represented), for removing the potential unconverted ammonia from the cracked gas. The ammonia depleted cracked gas, which is a gas derived from the cracked gas, is then sent to a pressure swing adsorption unit (not represented - also called PSA unit) to recover a purified hydrogen product. The cooling of the cracked gas, as well as other sources of waste heat, generates steam that cannot be valorized in the process easily. The burners generate a flue gas that is sent to a flue gas waste heat recovery section. The vaporized and superheated ammonia needs to be brought to a temperature of approximately 550-650°C to ensure a satisfactory conversion in the adiabatic reactor 2 and this is done through the flue gas waste heat recovery section.

A process according to the invention is described in figure 2. Ammonia is provided from an ammonia storage tank (not represented) in a liquid state, for example at a temperature of around -33°C. The provided ammonia is vaporized and superheated in a vaporizer and superheater 11. Instead of performing the pre-cracking reaction in an adiabatic reactor as in the state of the art, the pre-cracking reaction is performed in a pre-cracker unit 16 comprising a tube and shell heat exchanger 12. Tubes of the heat exchanger 12 are filled with a catalyst and the vaporized and superheated ammonia is passed to the tubes and through the catalyst for performing the pre-cracking reaction. The overall amount of catalyst contained in the tubes is designated as "catalyst bed". The catalyst comprises for example nickel or ruthenium as catalytically active material, in particular as a catalytically active material on a carrier, for example an aluminum oxide (Al₂O₃) carrier.

Water steam as a condensable medium is imported from the battery limit and passed to the shell of the heat exchanger 12 at a given controlled pressure and condensed in the shell. In one embodiment, the condensable medium is only partially condensed. In other words, a part of the condensable medium remains as less dense state, for example at a vapor state, a gas state or water steam state in comparison with liquid or liquid water state. The latent heat released from the condensation is transferred to the tubes, driving the pre-cracking reaction forward. The condensate may be exported to the battery limit.

The pre-cracking reaction is followed by a main endothermic cracking reaction in a main cracker unit 15 comprising one or more catalyst filled reactor tubes. The pre-cracker unit 16 and the main cracker unit 15 together form a cracker unit 18. The main cracker unit 15 produces a cracked gas comprising hydrogen, nitrogen and potentially unconverted ammonia.

The import of this water steam is optional. Advantageously, the main cracker unit 15 comprises a waste heat recovery section (WHRS - not represented) and the cooling of the cracked gas can be used to generate steam in a boiler of this waste heat recovery section. A cooling of the flue gas in said boiler may be used as an alternative or in addition to the cooling of the cracked gas to generate steam. The cracked gas, a gas derived from the cracked gas and/or the flue gas are designated as effluent of the cracker unit 18. The generated steam is routed to the heat exchanger 12, condensed in the shell, and the condensate is recycled back to the boiler. Excess condensable medium co-produced by cooling the effluent from the cracker unit 18 is routed back to the cracker unit 18 (in this embodiment to the heat exchanger 12) and therefore excess heat from the condensable medium condensation is recycled to the endothermic cracking reaction, driving it forward. Waste heat is thereby reduced. In particular, providing the excess heat from the effluent of the main cracker unit 15 to the pre-cracker unit 12 enables reducing the load on the main cracker unit 15, thereby reducing co-produced condensable medium. Self regulation is thereby ensured.

Figure 3 represents the treatment of the cracked gas. The cooled cracked gas is sent to a water wash column 19, for removing the unconverted ammonia from the cracked gas. The ammonia depleted cracked gas, which is a gas derived from the cracked gas, is then sent to a hydrogen recovery unit 20 being a pressure swing adsorption unit to recover a purified hydrogen product.

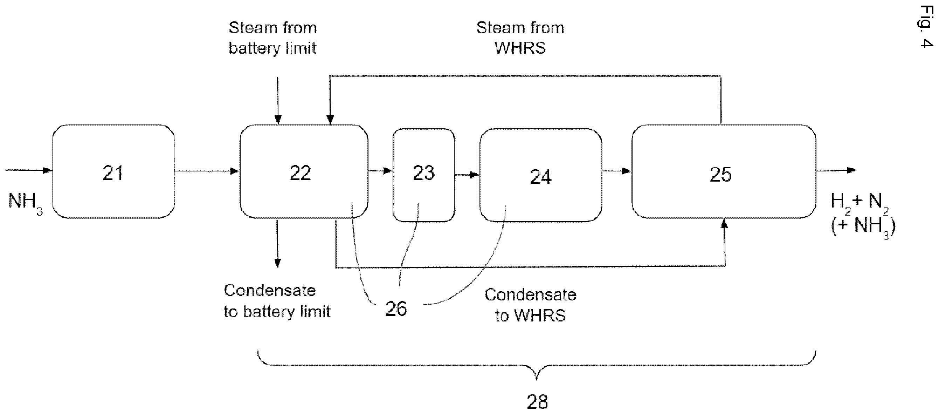

In the embodiment of figure 4, the vaporizer and superheater is designated by reference 21, the heat exchanger is designated by reference 22 and the main cracker unit comprising one or more catalyst filled tubes designated by reference 25. The pre-cracker unit 26 and the main cracker unit 25 together form a cracker unit 28. This embodiment differs from the embodiment of figure 2 in that a partially converted or pre-cracked gas mixture withdrawn from the heat exchanger 22 is heated in a heater 23 and the heated gas mixture is further pre-cracked in an adiabatic reactor 24. In this embodiment, the pre-cracker unit 26 encompasses the heat exchanger 22, the heater 23 and the adiabatic reactor 24. The temperature of the partly converted ammonia feed produced at the outlet of the pre-cracker unit 26 can be thereby increased and the overall ammonia conversion rate of the pre-cracking reaction is increased, enabling to further reduce the load on the main cracker unit 25. The heater 23 is for example an electrical heater or a flue gas heater (heat being brought by the flue gas to the withdrawn gas mixture). The pre-cracked gas, partly converted to a higher extent than in the second embodiment, is sent to the main cracker unit 25 for the final main endothermic cracking reaction. The same features as in the state of the art and the embodiment of figure 2 relating to the treatment of the cracked gas may be applied.

## Claims

1. Process for producing hydrogen from ammonia, comprising the steps :
i) providing an ammonia feed,
ii) providing a condensable medium, preferably water steam,
iii) performing an endothermic cracking reaction of the ammonia feed in a cracker unit (18, 28) for producing a cracked gas comprising hydrogen and nitrogen,
iv) condensing at least partially said condensable medium,
v) providing heat from the condensation to the endothermic cracking reaction,
vi) recovering hydrogen from said cracked gas or from a gas derived from said cracked gas.

2. Process according to the preceding claim, wherein step ii) comprises :
- providing a cooling medium,
- recovering heat from an effluent of the cracker unit (18, 28) by at least partially vaporizing said cooling medium,
- providing the at least partially vaporized cooling medium as said condensable medium.

3. Process according to one of the preceding claims, wherein the cracker unit (18, 28) comprises :
- a catalyst bed and step iii) comprises passing the ammonia feed to said catalyst bed and performing the endothermic cracking reaction in said catalyst bed,
- a condensable medium circulation section arranged in thermal communication with the catalyst bed and step iv) comprises passing the condensable medium to the condensable medium circulation section and condensing at least partially the condensable medium in the condensable medium circulation section.

4. Process according to one of the preceding claims, wherein step iii) comprises the following steps :
- performing a pre-cracking reaction of the ammonia feed in a pre-cracker unit (16, 26) for producing a partly converted ammonia feed comprising ammonia, hydrogen and nitrogen,
- performing a main endothermic cracking reaction of the partly converted ammonia feed in a main cracker unit (15, 25) for producing said cracked gas,
and step v) comprises providing said heat from the condensation to the pre-cracking reaction.

5. Process according to the preceding claim in combination with claim 3, wherein the pre-cracker unit comprises a heat exchanger (12, 22) arranged for the thermal communication of the condensable medium circulation section with the catalyst bed, said heat exchanger (12, 22) being a shell-and-tube heat exchanger comprising a shell, said heat exchanger comprising a circulation channel or a bundle of circulation channels extending within the shell and wherein the condensable medium circulation section is formed by said shell and the catalyst bed is comprised in said circulation channel or circulation channels.

6. Process according to one of claims 4 or 5 in combination with claim 3, wherein performing a pre-cracking reaction further comprises :
- withdrawing a gas mixture produced through a first pre-cracking reaction in said catalyst bed and
- performing a further adiabatic pre-cracking reaction of the withdrawn gas mixture in an adiabatic reactor (24), thereby producing said partly converted ammonia feed.

7. Process according to one of the preceding claims, wherein the condensable medium comprises water steam.

8. Apparatus configured to produce hydrogen from an ammonia feed, said apparatus comprising:
- a cracker unit (18, 28) configured for producing a cracked gas comprising hydrogen and nitrogen from said ammonia feed,
- a hydrogen recovery unit (20) configured for recovering hydrogen from said cracked gas or from a gas derived from said cracked gas,
wherein said cracker unit (18, 28) comprises :
- a catalyst bed suitable to perform an endothermic ammonia cracking reaction of the ammonia feed into said cracked gas,
- a condensable medium circulation section arranged in thermal communication with the catalyst bed and for the circulation and condensation of a condensable medium, to provide heat to the catalyst bed.

9. Apparatus according to the preceding claim, comprising :
- a boiler and a condensable medium conduit connecting said boiler to the condensable medium circulation section for providing said condensable medium from the boiler to the condensable medium circulation section,
- a waste heat recovery section arranged for recovering heat from an effluent of the cracker unit (18, 28),
wherein the waste heat recovery section comprises said boiler arranged for producing the condensable medium using the recovered heat.

10. Apparatus according to one of claims 8 or 9, wherein the cracker unit (18, 28) comprises :
- a pre-cracker unit (16, 26) arranged to receive the ammonia feed for producing a partly converted ammonia feed comprising ammonia, hydrogen and nitrogen, said pre-cracker unit (16, 26) comprising the catalyst bed and the condensable medium circulation section,
- a main cracker unit (15, 25) arranged to receive the partly converted ammonia feed for producing said cracked gas.

11. Apparatus according to claim 10, wherein the pre-cracker unit (16, 26) comprises a heat exchanger (12, 22) arranged for the thermal communication of the condensable medium circulation section with the catalyst bed, said heat exchanger (12, 22) being a shell-and-tube heat exchanger comprising a shell and a circulation channel or a bundle of circulation channels extending within said shell and wherein the condensable medium circulation section is formed by said shell and the catalyst bed is comprised in said circulation channel or circulation channels.

12. Apparatus according to the preceding claim, wherein the pre-cracker unit (16, 26) further comprises an adiabatic reactor (24) connected to the heat exchanger (12, 22) to perform an adiabatic pre-cracking reaction of a gas mixture withdrawn from said heat exchanger (12, 22).

13. Apparatus according to one of claims 8 to 12, comprising a pressure controller configured to control the pressure of the condensable medium in the condensable medium circulation section, so as to regulate an amount of said heat provided to the catalyst bed.

14. Start-up method of a plant for the production of hydrogen from ammonia, said method comprising :
- providing an ammonia feed,
- providing a condensable medium, preferably water steam,
- condensing at least partially said condensable medium,
- providing heat from the condensation to an endothermic cracking reaction of the ammonia feed for starting said endothermic cracking reaction and producing a cracked gas comprising hydrogen and nitrogen.
